# EUROPÄISCHE PATENTANMELDUNG

(11) **EP 1 655 527 A1**
(43) Veröffentlichungstag der Anmeldung: **10.05.2006**
(21) Anmeldenummer: 04026233.9
(22) Anmeldetag: 05.11.2004
(51) Int. Cl.: F16K 11/048

(54) **Ventil für eine Kompaktheizungsanlage**

(71) Anmelder: GRUNDFOS A/S, 8850 Bjerringbro (DK)
(72) Erfinder: Blome, Oliver, 8000 Århus, C (DK); Nielsen, Knud Winther, 8000 Ârhus, C (DK)
(74) Vertreter: Vollmann, Heiko

(57) **Zusammenfassung**

Das Ventil ist für eine Kompaktheizungsanlage vorgesehen und weist ein Einschubgehäuse auf, an das die zur verschaltenden Leitungen anschließen. Es ist ein Einschubkörper (12) vorgesehen, welcher mindestens einen Dichtsitz (18) trägt und indem mindestens ein einen Dichtkörper (20) tragender Schaltkörper (21) bewegbar geführt ist. Zwischen Dichtsitz (18) und Dichtkörper (20) ist eine elastische Dichtung (19) vorgesehen, die am Einschubkörper (12) festgelegt ist.

## Beschreibung

Die Erfindung betrifft ein Ventil für eine Kompaktheizungsanlage gemäß den im Oberbegriff des Anspruchs 1 angegebenen Merkmalen.

Ventile dieser Art werden typischerweise für Kompaktheizungsanlagen eingesetzt, bei denen ein Wärmeträger, typischerweise Wasser im Kreislauf geführt wird und wahlweise entweder der Raumheizung oder bei Bedarf einem Wärmetauscher zugeführt wird, welcher für die Brauchwassererwärmung vorgesehen ist. Solche Kompaktheizungsanlagen sind beispielsweise aus EP 0.797 057 B1 bekannt.

Ein solches, typischerweise 3/2-Wegeventil, das durch ein anlagenseitig gebildetes Einschubgehäuse sowie einen darin eingliederbaren Einschubkörper als Ventileinsatz gebildet ist, ist aus EP 1 367 306 A1 bekannt. Dieses Ventil, das durch einen Ventileinsatz bestehend aus einem Einschubkörper und einem darin bewegbar geführten Schaltkörper gebildet ist, welcher zwei Dichtkörper trägt, die je nach Stellung zur Anlage auf dem einen oder anderen Dichtsitz am Einschubkörper kommen, hat sich grundsätzlich bewährt, da es konstruktiv wenig aufwändig und daher kostengünstig zu fertigen sowie im Wartungsfalle einfach zu reparieren bzw. auszutauschen ist. Nachteilig ist allerdings, dass die Dichtkörper auch gleichzeitig die Dichtung bilden. Sie müssen also einerseits ausreichend eigensteif ausgebildet werden, um die mechanischen Schließ- und Dichtkräfte zu übertragen, andererseits jedoch ausreichend elastisch, um bei Anlage am Dichtsitz eine möglichst vollständige Abdichtung desselben zu gewährleisten. Insbesondere wenn die Dichtkörper aus gummielastischem Material ausgebildet sind, stellt sich im Laufe der Zeit ein gewisser Härtungseffekt ein, welcher sich negativ auf die Dichtwirkung auswirkt.

Vor diesem Hintergrund liegt der Erfindung die Aufgabe zugrunde, ein gattungsgemäßes Ventil so auszubilden, dass einerseits eine hohe Funktionssicherheit gegeben ist und andererseits eine kostengünstige Herstellung in der Großserienfertigung möglich ist.

Diese Aufgabe wird gemäß der Erfindung durch die im kennzeichnenden Teil des Anspruchs 1 angegebenen Merkmale gelöst. Vorteilhafte Ausgestaltungen der Erfindung ergeben sich aus den Unteransprüchen, der nachfolgenden Beschreibung sowie der Zeichnung.

Gemäß der Erfindung ist demnach vorgesehen, zwischen Dichtsitz und Dichtkörper eine elastische Dichtung anzuordnen, die am Einschubkörper festgelegt ist. Beim Vorhandensein einer solchen elastischen Dichtung können die Dichtkörper eigensteif und starr, d.h. insbesondere als Kunststoffspritzgussteile kostengünstig ausgebildet werden, wobei die Anpassung dann dichtsitzseitig, nämlich durch die dort angeordnete elastische Dichtung erfolgt. Grundgedanke der vorliegenden Erfindung ist es also zum einen die Dicht- und Schließfunktion des Dichtkörpers zu trennen, so dass dieser nur noch Schließfunktionen hat, wohingegen die eigentliche Dichtfunktion durch eine gesonderte elastische Dichtung sichergestellt wird. Dadurch kann der Dichtkörper wesentlich kostengünstiger gefertigt werden, zudem ausreichend eigensteif, um zuverlässig die Schließkräfte übertragen zu können. Die Abdichtung als solche erfolgt mittels der elastischen Dichtung, die gemäß der Erfindung am Einschubkörper und nicht am Dichtkörper angeordnet ist. Dies hat insbesondere fertigungstechnische Vorteile, da insbesondere beim Einsatz geeigneter Herstellungsverfahren auf eine gesonderte Montage der Dichtung verzichtet werden kann. Dies hat zudem den Vorteil, dass bei geeigneter Anordnung der übrigen Dichtungen zur Erneuerung insbesondere sämtlicher Dichtungen lediglich der Einschubkörper und nicht der Schaltkörper mit den Dichtkörpern auszutauschen sind.

Vorteilhaft weist der Einschubkörper zwei Dichtsitze auf, denen zwei am Schaltkörper vorgesehene Dichtkörper zugeordnet sind, wobei zwischen den Dichtsitzen und den Dichtkörpern jeweils elastische Dichtungen vorgesehen sind, die am Einschubkörper festgelegt sind. Eine solche Ausbildung ist insbesondere im Hinblick auf den Schaltkörper und die damit verbundenen Dichtkörper von Vorteil, da diese Teile z. B. als Kunststoffspritzgussteile kostengünstig gefertigt werden können.

Um den Einschubkörper innerhalb des Einschubgehäuses abzudichten ist es vorteilhaft, diesen mit Dichtungen zu versehen, mit denen er gegenüber dem Einschubgehäuse abgedichtet ist. Gemäß der Erfindung sind diese Dichtungen vorteilhaft am Einschubkörper festgelegt. Bei einer solchen Anordnung sind gehäuseseitig keine Dichtungen vorzusehen, was hinsichtlich der Montage besonders günstig ist, da es naturgemäß aufwändiger ist eine Dichtung in einem Gehäuse einzugliedern als diese an der Außenseite eines Einschubkörpers festzulegen. Besonders vorteilhaft ist es, wenn alle Dichtungen des Ventils am Einschubkörper festgelegt sind, da dann durch Austausch nur des Einschubkörpers auch alle Ventildichtungen erneuert werden können. Unter alle Dichtungen des Ventils im Sinne der vorliegenden Erfindung fallen auch die Dichtungen, welche den Einschubkörper gegenüber dem Einschubgehäuse abdichten. Es kann also im Wartungsfalle durch Austausch des Einschubkörpers ein kompletter Dichtungsaustausch erfolgen, ohne dass Eingriffe in den typischerweise engen Einbauraum des Einschubgehäuses erforderlich sind.

Fertigungstechnisch besonders vorteilhaft ist es, wenn die am Einschubkörper festgelegten Dichtungen im Mehrkomponentenspritzgussverfahren einstückig mit dem Einschubkörper ausgebildet sind. Auf diese Weise entfallen bei der Herstellung des Ventils sämtliche Montageschritte zum Einbau von Dichtungen, was üblicherweise kostenintensiv manuell erfolgen muss. Darüber hinaus wird zugleich sichergestellt, dass nicht bei der Montage versehentlich eine Dichtung vergessen wird, wodurch die Funktionalität des gesamten Ventils beeinträchtigt würde.

Vorteilhaft ist es, wenn der Schaltkörper durch ein Kunststoffspritzgussteil gebildet ist, an welchem mindestens ein, vorzugsweise ebenfalls als Kunststoffspritzgussteil ausgebildeter Dichtkörper befestigt ist. Die Befestigung erfolgt vorzugsweise zerstörungsfrei lösbar, so dass der Schaltkörper mit den daran befindlichen Dichtkörpern demontierbar und ggf. wiedermontierbar ist, wenn beispielsweise der Einschubkörper mit den daran festgelegten Dichtungen erneuert werden soll.

Wenn, was zweckmäßig ist, der Schaltkörper zwei vorzugsweise an seinen Enden vorgesehene Dichtkörper aufweist, dann ist es zweckmäßig, beide Dichtkörper lösbar am Schaltkörper festzulegen, vorzugsweise formschlüssig rastend festzulegen. Dann können die Dichtkörper beispielsweise als einfache Lochscheiben identisch ausgebildet sein, welche beispielsweise über einen jeweils am Ende des Schaltkörpers vorgesehenen geteilten Dorn aufschiebbar sind, der die Dichtkörper nach überwinden der Rastkraft formschlüssig hält oder in umgekehrter Weise wie weiter unter beschrieben.

Da Kompaktheizungsanlagen der eingangs genannten Art eine möglichst kompakte Bauform aufweisen um in engen Nischen oder Schränken eingebaut werden zu können, ist das üblicherweise parallel zur Laufradachse der Pumpe angeordnete Ventilgehäuse mit dem darin eingegliederten Einschubgehäuse im Wesentlichen zylindrisch und lang gestreckt ausgebildet, so dass die Strömung innerhalb des Gehäuses um etwa 180° umgelenkt wird. Dies ist strömungstechnisch grundsätzlich ungünstig, weshalb gemäß einer Weiterbildung der Erfindung innerhalb des Ventilgehäuses ein an dem Einschubkörper angrenzender Strömungsleitkörper eingegliedert ist, welcher die Strömung gezielt um etwa 90° umleitet und vergleichsweise geringe Strömungsverluste durch Umlenkung bewirkt. Ein solcher Strömungsleitkörper ist vorteilhaft über eine formschlüssige Verbindung derart mit dem Einschubkörper verbunden, dass über den Strömungsleitkörper auch der Einschubkörper aus dem Ventilgehäuse herausgezogen oder in dieses hineingeschoben werden kann. Dies kann in einfacher Form durch eine stirnseitige Bajonettierung zwischen Strömungsleitkörper und Einschubkörper gewährleistet werden.

Um den Einschubkörper mit den darin befindlichen über den Schaltkörper verbundenen Dichtkörpern sowie ggf. den daran gekoppelten Strömungsleitkörper formschlüssig innerhalb des Ventilgehäuses festzulegen und einfach montieren bzw. demontieren zu können weist das Ventilgehäuse vorteilhaft eine zylindrische Innenkontur auf, die an der offenen Stirnseite durch einen Verschlusskörper abgeschlossen ist, der vorzugsweise mittels einer Bajonettverbindung formschlüssig am Dichtgehäuse befestigt ist. Zwischen Verschlusskörper und Ventilgehäuse ist vorteilhaft verschlusskörperseitig eine O-Ring-Dichtung vorgesehen, welche die Dichtheit der Verbindung gewährleistet. Der Verschlusskörper ist dabei zweckmäßigerweise von vorne zugänglich angeordnet, so dass auch in eingebautem Zustand sämtliche Bauteile von vorne erreichbar und ggf. austauschbar sind. Es wird in diesem Zusammenhang ausdrücklich auf die nachveröffentlichte europäische Patentanmeldung mit der Anmeldenummer 03 025 083.1 verwiesen, welche eine solche Kompaktheizungsanlage beschreibt.

Die Erfindung ist nachfolgend anhand eines in den Zeichnungen dargestellten Ausführungsbeispiels näher erläutert. Es zeigen:
- Fig. 1: in perspektivischer Darstellung ein Armaturengehäuse einer Kompaktheizungsanlage, wie sie im Einzelnen in der vorgenannten nachveröffentlichten europäischen Patentanmeldung beschreiben ist mit den darin befindlichen Einbauten,
- Fig. 2: das Armaturengehäuse gemäß Fig. 1 mit vom Ventilgehäuse abgenommenem Verschlusskörper und herausgezogenem Einschubkörper mit zugehörigen Bauteilen,
- Fig. 3: in vergrößerter Explosionsdarstellung den Strömungsleitkörper, den Einschubkörper sowie den Schaltkörper mit den endseitig daran zu befestigen Dichtkörpern,

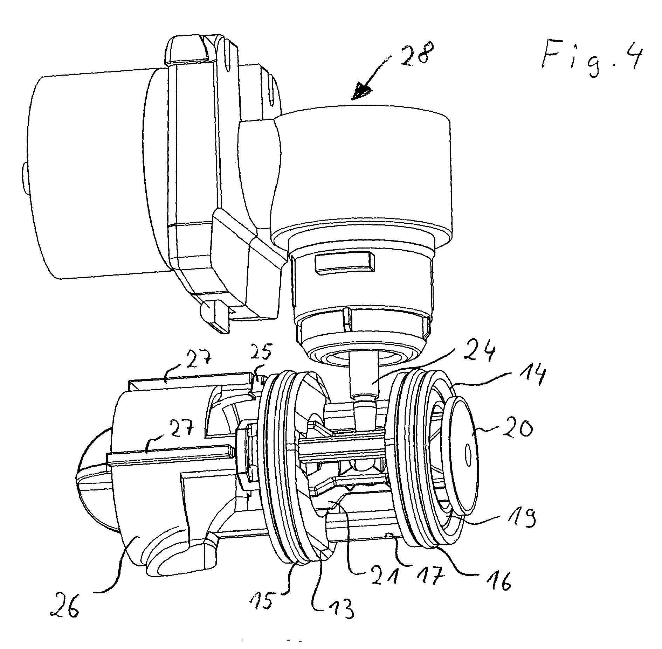

- Fig. 4: in perspektivischer Darstellung die Antriebseinheit mit Einschubkörper mit darin befindlichem Schaltkörper mit daran befindlichen Dichtkörpern und dem an den Einschubkörper angeschlossenen Strömungsleitkörper ohne Armaturengehäuse und
- Fig. 5: eine perspektivische Darstellung der Bauteile gemäß Fig. 4 von einer anderen Seite.

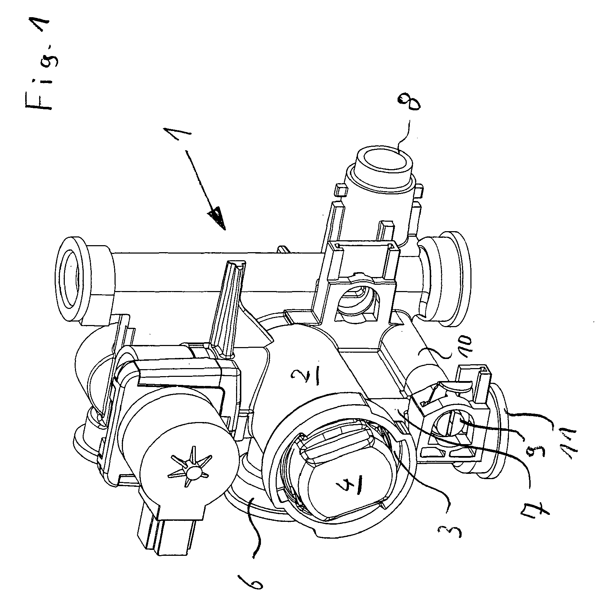

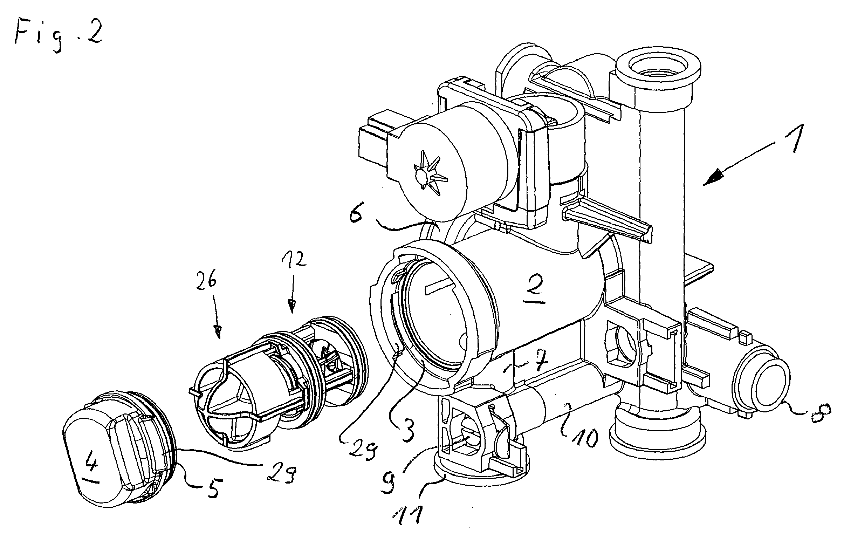

Das anhand der Figuren 1 und 2 dargestellte Armaturengehäuse 1 bildet Teil einer Baueinheit für eine Kompaktheizungsanlage, wie sie im Einzelnen in der nachveröffentlichten europäischen Patentanmeldung 03 025 083.1 beschrieben ist, auf die hier ausdrücklich verwiesen wird.

Zentraler Teil dieses Armaturengehäuses 1 bildet ein im Wesentlichen zylindrisch ausgebildetes Einschubgehäuse 2, welches das Gehäuse eines 3/2-Wegeventils bildet. Das Einschubgehäuse 2 ist im Wesentlichen topfartig ausgebildet und weist lediglich an seiner in Einbaulage nach vorne weisenden Stirnseite einer Einschuböffnung 3 auf, die mittels eines Stopfens 4 verschließbar ist. Der Stopfen 4 ist über eine Bajonettverbindung formschlüssig in der Einschuböffnung 3 festlegbar, er weist einen in das Einschubgehäuse 2 reichenden zylindrischen Vorsprung 5 auf, der einen O-Ring trägt, der vorzugsweise einstückig mit dem Stopfen 4 im Mehrkomponentenspritzgießverfahren hergestellt ist und mit dem der Stopfen 4 gegenüber dem Gehäuse 2 abgedichtet ist.

In das Einschubgehäuse 2 münden drei Leitungen, und zwar etwa in der Mitte des Zylinders (in Fig. 1 von links kommend) eine Leitung 6, welche für die Zufuhr warmen Wassers vorgesehen ist, welches vom Primärwärmetauscher der Heizungsanlage kommt. Weiter vorne von unten mündet eine Leitung 7 in das Einschubgehäuse 2, die zu einem darunter liegenden Anschlussstutzen 11 führt, welcher zum Anschluss der Raumheizung, also zum Anschluss der Heizkörper, Fußbodenheizungsrohre oder dgl. vorgesehen ist.

Die Leitung 7 ist mit einer um 90° dazu nach hinten und parallel unterhalb des Einschubgehäuses 2 verlaufenden Leitung 10 verbunden, welche in eine zu einem Anschlussstutzen 8 mündende Leitung mündet, welche zum Anschluss des Rücklaufs zur Pumpe vorgesehen ist. Innerhalb der Leitung 7 sitzt von vorne zugänglich ein einstellbares Überdruckventil, das an sich bekannt ist und hier daher nicht im Einzelnen dargestellt ist. Die Einstellung des Überdruckventils erfolgt über eine Stellschraube 9, welche in Einbaulage von vorne zugänglich ist. Das Überströmventil dient dazu, sicherzustellen, dass bei abgesperrten Raumheizungskreislauf ein Kreislaufsystem zumindest innerhalb der Kompaktheizungsanlage aufrechterhalten wird, also beim Überschreiten einer am Ventil einstellbaren Druckdifferenz Vorlauf und Rücklauf innerhalb des Armaturengehäuses 1 kurzgeschlossen, d.h. unmittelbar leitungsverbunden werden.

In Einbaulage weiter hinten, jenseits des Anschlusses der Leitung 6 mündet in das Einschubgehäuse 2 eine in den Figuren nicht im Einzelnen sichtbare nach oben und hinten verlaufende Leitung, welche in einem rückwärtigen Anschluss für einen Sekundärwärmetauscher mündet, welcher für die Brauchwassererwärmung vorgesehen ist.

Um das vom Primärwärmetauscher über die Leitung 6 in das Ventil einströmende warme Wasser wahlweise entweder dem rückwärtigen Sekundärwärmetauscher zur Brauchwassererwärmung oder der Leitung 7 mit dem Anschlussstutzen 11 zur Raumheizung zuzuführen, ist innerhalb des Einschubgehäuses 2 ein Einschubkörper 12 von vorne durch die Einschuböffnung 3 eingesetzt, welcher das eigentliche Ventil bildet.

Der Einschubkörper 12 besteht im Wesentlichen aus zwei ringförmigen Scheiben 13 und 14, die umlaufende Dichtungen 15 und 16 tragen und so angeordnet und ausgebildet sind, dass sie dichtend in das Einschubgehäuse 2 von vorne eingliederbar sind. Die ringförmigen Schreiben 13 und 14 sind über Längsstege 17 fest miteinander verbunden. Sie weisen im Bereich ihrer Innenausnehmungen 18 jeweils an den nach außen gerichteten Stirnseiten Dichtungen 19 auf.

Die Innenausnehmungen 18 mit den Dichtungen 19 bilden Dichtsitze für Dichtkörper 20, welche an den Stirnseiten eines Schaltkörpers 21 formschlüssig rastend befestigt sind, der innerhalb der Innenausnehmungen 18 bewegbar geführt ist und sich durch diese erstreckt.

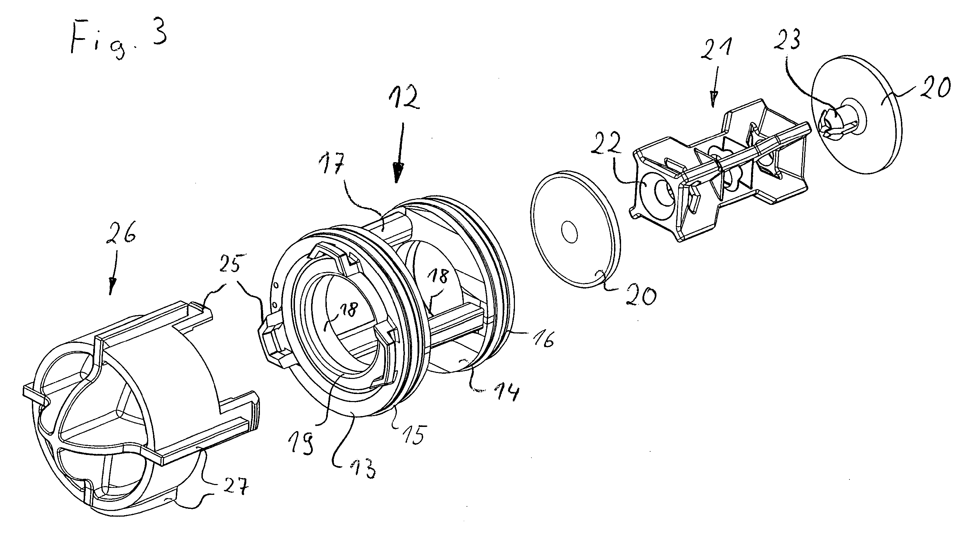

Der Schaltkörper weist die aus Fig. 3 im Einzelnen ersichtliche Form auf, ist also ebenfalls als Hohlkörper ausgebildet und weist an seinen schmalen Stirnseiten Ausnehmungen 22 auf, welche zur Aufnahme von längsgeteilten konisch abgeschrägten Raststiften 23 vorgesehen sind, die an den Dichtkörpern 20 angeformt sind. Darüber hinaus weist der Schaltkörper 21 im mittleren Bereich eine Aufnahme für das eine Ende eines Schalthebels 24 auf.

Der Schaltkörper 21, die beiden Dichtkörper 20 mit den Raststiften 23 sowie der Einschubkörper 12 sind als Kunststoffspritzgussteile ausgebildet. Der Einschubkörper 12 ist als Mehrkomponentenspritzgussteil ausgebildet, d.h. er weist zum einen die aus vergleichsweise hartem Kunststoff gebildeten ringförmigen Schreiben 13 und 14 sowie die daraus gebildeten Längsstege 17 auf und zum anderen aus weichelastischem Kunststoff gebildete umlaufende Dichtungen 15 und 16 sowie die Dichtungen 19, die sämtlichst einstückig mit dem Einschubkörper 12 gespritzt sind.

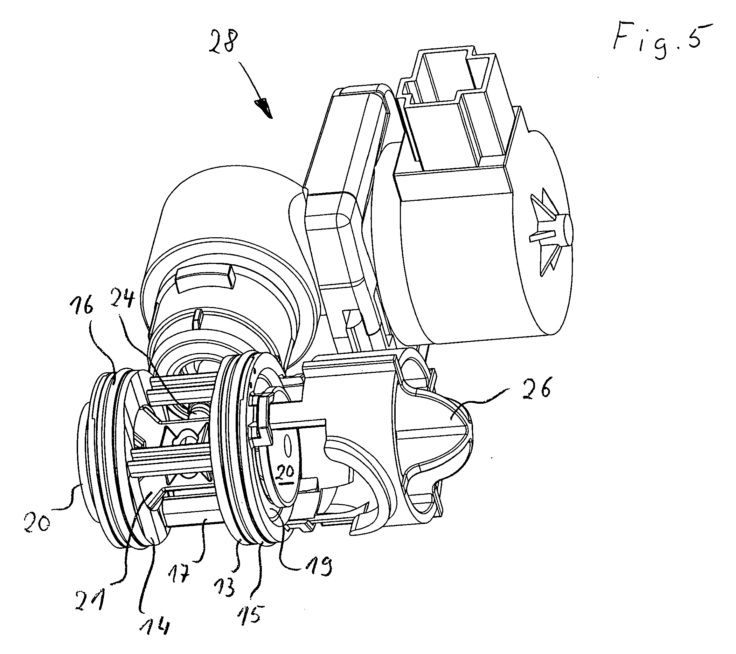

Der Einschubkörper 12 ist über eine Rastverbindung 25 formschlüssig lösbar mit einem Strömungsleitkörper 26 verbunden, der innerhalb des Einschubgehäuses 2 über Stege 27 längsverschiebbar geführt ist und mittels der Rastverbindung 25 lösbar, jedoch in Ein- bzw. Ausschubrichtung formschlüssig mit dem Einschubkörper 12 verbindbar ist. Statt der Rastverbindung 25 kann auch eine formschlüssige Bajonettverbindung vorgesehen sein, welche diese Bauteile derart verbindet, dass sie gemeinsam in das Einschubgehäuse 2 einschiebbar bzw. aus diesem herausziehbar sind. Der Strömungsleitkörper 26 dient im Wesentlichen zum gerichteten Umlenken der Strömung aus Achsrichtung des Einschubgehäuses 2 nach unten. Er ist dazu an seiner in Fig. 3 nicht sichtbaren Innenseite nach Art eines Rohrkrümmers ausgebildet, welcher die Strömung reibungsarm nach unten umlenkt (siehe Fig. 5).

Da der Einschubkörper 12 sämtliche Dichtungen 15, 16 und 19 des Ventils trägt, braucht zur Montage des Ventils lediglich der Schaltkörper 21 in den Einschubkörper 12 eingeschoben werden, wonach die Dichtkörper 20 durch einfaches Aufstecken in den Ausnehmungen 22 befestigt werden. Es wird dann der Strömungsleitkörper 26 mittels der Rastverbindung 25 mit dem fertig bestückten Einschubkörper 12 verbunden und in das Einschubgehäuse 2 bis zum Anschlag eingeschoben, wonach der Stopfen 4 dichtend nachgesetzt und durch Drehung verriegelt wird.

Das so fertig montierte Ventil wird dann durch Eingliedern einer an sich bekannten Antriebseinheit 28 in eine das Einschubgehäuse 2 in Fig. 1 von oben durchsetzende Anschlussöffnung komplettiert. Dabei greift der Hebel 24 formschlüssig in den Schaltkörper 21 ein, so dass durch entsprechende Steuerung eines Schrittmotors der Schaltkörper 21 in die eine oder andere Endstellung verfahren werden kann, in welcher ein Dichtkörper 20 eine der Innenausnehmungen 18 durch dichte Anlage an der Dichtung 19 abdichtet oder freigibt. Die Antriebseinheit 28 ist gegenüber dem Einschubgehäuse 2 abgedichtet, und zwar sowohl zum Schalthebel 24 hin, als auch nach Außen.

Wenn im Wartungsfall die Dichtungen überprüft oder getauscht werden sollen, ist in umgekehrter Reihenfolge zunächst die Antriebseinheit durch Endriegein des entsprechenden Bajonetts nach oben zu entfernen, wonach nach Entfernen des Stopfens 4 durch Ziehen am Strömungsleitkörper 26 dieser zusammen mit dem Einschubkörper 12, dem darin befindlichen Schaltkörper 21 und den daran angeordneten Dichtkörpern 20 aus der Einschuböffnung 3 herausziehbar ist.

Nach Endfernen mindestens eines Dichtkörpers 20 kann der Schaltkörper herausgezogen und der eigentliche Einschubkörper 12 mit den Dichtungen ggf. ausgetauscht werden, wonach die Montage in vorbeschriebener Weise erfolgt.

### Bezugszeichenliste

- 1: - Armaturengehäuse
- 2: - Einschubgehäuse
- 3: - Einschuböffnung
- 4: - Stopfen
- 5: - Zylindrischer Vorsprung des Stopfens
- 6: - Leitung vom Primärwärmetauscher
- 7: - Leitung zur Raumheizung
- 8: - Anschlussstutzen
- 9: - Stellschraube
- 10: - Leitung
- 11: - Anschlussstutzen Vorlauf/Raumheizung
- 12: - Einschubkörper
- 13: - Ringförmige Scheibe
- 14: - Ringförmige Schreibe
- 15: - Umlaufende Dichtung
- 16: - Umlaufende Dichtung
- 17: - Längsstege
- 18: - Innenausnehmungen
- 19: - Dichtungen
- 20: - Dichtkörper
- 21: - Schaltkörper
- 22: - Ausnehmungen im Schaltkörper
- 23: - Raststifte
- 24: - Schalthebel
- 25: - Rastverbindung
- 26: - Strömungsleitkörper
- 27: - Führungsstege
- 28: - Antriebseinheit
- 29: - Bajonettverbindung

## Patentansprüche

1. Ventil für eine Kompaktheizungsanlage mit einem Einschubgehäuse (2), an das die zu verschaltenden Leitungen (6, 7) anschließen, und mit einem Einschubkörper (12), welcher mindestens einen Dichtsitz (18) trägt und in dem ein mindestens einen Dichtkörper (20) tragender Schaltkörper (21) bewegbar geführt ist, **dadurch gekennzeichnet, dass** zwischen Dichtsitz (18) und Dichtkörper (20) eine elastische Dichtung (19) vorgesehen ist, die am Einschubkörper (12) festgelegt ist.

2. Ventil nach Anspruch 1, **dadurch gekennzeichnet, dass** der Einschubkörper (12) zwei Dichtsitze (18) aufweist, denen zwei am Schaltkörper (21) vorgesehene Dichtkörper (20) zugeordnet sind, und dass die zwischen den Dichtsitzen (18) und den Dichtkörpern (20) vorgesehenen elastischen Dichtungen (19) am Einschubkörper (12) festgelegt sind.

3. Ventil nach einem der vorhergehenden Ansprüche, **dadurch gekennzeichnet, dass** der Einschubkörper (12) Dichtungen (15, 16) aufweist, mit denen er gegenüber dem Einschubgehäuse abgedichtet ist und die am Einschubkörper (12) festgelegt sind.

4. Ventil nach einem der vorhergehenden Ansprüche, **dadurch gekennzeichnet, dass** alle Dichtungen (15, 16, 19) des Ventils am Einschubkörper (12) festgelegt sind.

5. Ventil nach einem der vorhergehenden Ansprüche, **dadurch gekennzeichnet, dass** die am Einschubkörper (12) festgelegten Dichtungen (15, 16, 19) im Mehrkomponentenspritzgußverfahren einstückig mit dem Einschubkörper (12) ausgebildet sind.

6. Ventil nach einem der vorhergehenden Ansprüche, **dadurch gekennzeichnet, dass** der Schaltkörper (21) durch ein Kunststoffspritzgußteil gebildet ist, an welchem mindestens ein Dichtkörper (20) vorzugsweise lösbar befestigt ist.

7. Ventil nach einem der vorhergehenden Ansprüche, **dadurch gekennzeichnet, dass** zwei Dichtkörper (20) an den beiden Enden des Schaltkörpers (21) formschlüssig rastend festgelegt sind.

8. Ventil nach einem der vorhergehenden Ansprüche, **dadurch gekennzeichnet, dass** innerhalb des Ventilgehäuses (2) ein an den Einschubkörper (12) angrenzender Strömungsleitkörper (26) eingegliedert ist.

9. Ventil nach einem der vorhergehenden Ansprüche, **dadurch gekennzeichnet, dass** zwischen Strömungsleitkörper (26) und Einschubkörper (12) Formschlussmittel (25) vorgesehen sind, mit denen eine formschlüssige Verbindung dieser Körper in Einschub- und/oder Gegenrichtung herstellbar ist.

10. Ventil nach einem der vorhergehenden Ansprüche, **dadurch gekennzeichnet, dass** das Ventilgehäuse (2) eine zylindrische Innenkontur aufweist und an einer Stirnseite durch einen Verschlußkörper (4) abgeschlossen ist, der vorzugsweise mittels einer Bajonettverbindung (29) formschlüssig am Ventilgehäuse (2) befestigt ist.
